# EUROPÄISCHE PATENTSCHRIFT

(11) **EP 2 240 713 B1**
(45) Veröffentlichungstag und Bekanntmachung des Hinweises auf die Patenterteilung: **14.12.2011**
(21) Anmeldenummer: 09711123.1
(22) Anmeldetag: 26.01.2009
(51) Int. Cl.: F16K 31/06, F16K 39/02

(54) **ELEKTROMAGNETISCH BETÄTIGBARES SITZVENTIL**
ELECTROMAGNETICALLY-OPERATED SEAT VALVE
SOUPAPE À SIÈGE À COMMANDE ÉLECTROMAGNÉTIQUE

(30) Priorität: 14.02.2008 DE 102008000296
(43) Veröffentlichungstag der Anmeldung: 20.10.2010
(73) Patentinhaber: ZF Friedrichshafen AG, 88038 Friedrichshafen (DE)
(72) Erfinder: PETZOLD, Rainer, 88045 Friedrichshafen (DE); STEINBORN, Mario, 88046 Friedrichshafen (DE)
(86) Internationale Anmeldenummer: PCT/EP2009/050826
(87) Internationale Veröffentlichungsnummer: WO 2009/100977

(56) Entgegenhaltungen:
- DE-A1- 2 553 011
- DE-A1- 3 942 026
- DE-C1- 19 805 513

## Beschreibung

Die Erfindung betrifft ein elektromagnetisch betätigbares Sitzventil gemäß den Merkmalen des Oberbegriffs von Anspruch 1, insbesondere zum Regeln von großen Volumenströmen.

Grundsätzlich werden zum Regeln von gasförmigen oder flüssigen Volumenströmen Schiebe- oder Kolbenventile und Sitzventile eingesetzt. Schiebe- oder Kolbenventile weisen zylinderförmige Steuerelemente auf, die in einer Bohrung des Ventils in Richtung ihrer Längsachse verschiebbar sind. Dabei werden verschiedene Räume durch ringförmige Dichtungen an der Wandung der Bohrung gegeneinander abgedichtet. Die an den Wandung der Bohrung entlang gleitenden Schieberingdichtungen sind einem gewissen Verschleiß unterworfen. Zum Regeln von großen Volumenströmen sind Schiebeventile nur bedingt geeignet, weil die Steuerelemente von Schiebeventilen zum Freigeben und Verschließen von großen Strömungsquerschnitten lange Wege zurücklegen müssen. Die Ansprechzeiten und die Zeit bis zum Erreichen eines ausreichend großen Volumenstroms beim Öffnen eines Schiebeventils werden entsprechend lang.

Zum Regeln von großen Volumenströmen in kurzer Zeit eignen sich deshalb Sitzventile besser, weil die Schließelemente von Sitzventilen auch mit minimalen Hüben große Strömungsquerschnitte freigeben bzw. verschließen können. Wegen der geringen Hübe lassen sich bei Sitzventilen deutlich höhere Ansteuerfrequenzen erreichen als bei Schiebeventilen mit vergleichbar hohem Volumendurchsatz. Dies wiederum ermöglicht eine dynamischere, d.h. schneller reagierende Regelung auch bei großen Volumenströmen. Aus diesem Grund werden zum Regeln von großen Volumenströmen bevorzugt Sitzventile eingesetzt.

Bei herkömmlichen Sitzventilen drückt ein auf der Zulaufseite anstehender Vorratsdruck das Schließelement auf den Ventilsitz und dichtet das Sitzventil in geschlossener Stellung ab. Der ablaufseitige Druck ist bei geschlossener Stellung des Sitzventils in der Regel niedriger als der zulaufseitige Vorratsdruck oder gleich dem Umgebungsdruck, sodass die geschlossene Stellung im unbestromten Zustand eines öffnenden Elektromagnetes gewährleistet ist. Bei vielen Ausführungen wird die Schließkraft des Ventils durch eine Schließfeder, die das Schließelement auf den Ventilsitz drückt, zusätzlich unterstützt.

Die benötigte Kraft zum Öffnen des Sitzventils muss größer sein als die Summe aus Schließfederkraft und statischer Druckkraft. Die statische Druckkraft steigt mit größer werdender Querschnittsfläche an, und folglich auch die zum Öffnen des Sitzventils erforderliche Kraft. Die Kraft zum Öffnen des Sitzventils muss vom Elektromagneten aufgebracht werden. Um ein Sitzventil für große Volumenströme vorzusehen, sind entsprechend große Elektromagnete erforderlich. Große Elektromagnete verursachen hohe Herstellkosten, erfordern großen Einbauraum und einen höheren Strombedarf.

Um die Öffnungskraft und damit die erforderliche Größe der Elektromagnete zu begrenzen, werden teilweise so genannte Boosterventile eingesetzt, in denen das Strömungsmedium eine verstärkende Wirkung hat. Auch vorgesteuerte Ventile, bei denen beim Öffnen des Ventils zunächst über eine Vorsteueröffnung ein Druckausgleich durchgeführt und erst danach der Hauptventilsitz geöffnet wird, werden aus diesem Grund eingesetzt.

Ein Beispiel eines solchen Sitzventils ist aus der DE19805513C1 bekannt. Darin ist ein Magnetventil mit einem Ventilsitz beschrieben, dessen Ventilkörper über einen Ventilschaft und eine Spindel mit einem Magnetanker verbunden sind. Beim Betätigen des Magnetventils mittels eines Magnetantriebes bewegen sich der mit dem Ventilkörper verbundene Magnetanker, die Spindel und der Ventilschaft innerhalb eines abgeschlossenen Raumes zwischen einer geschlossenen und einer offenen Stellung des Ventils auf und ab. Zum Druckausgleich sind sowohl in dem Ventilschaft, als auch in dem Magnetkern Bohrungen vorgesehen, welche die sich beim Betätigen des Ventils verändernden Räume miteinander verbinden. Zusätzlich ist ein mit dem Ventilschaft verbundener Entlastungskolben vorgesehen, der in einer Entlastungskammer arbeitet und eine Druckentlastung bei einsetzender Ventilbetätigung bewirkt.

Bei derartigen Ventilen ist aber eine Vielzahl an Bauteilen und Vorkehrungen zur Druckentlastung notwendig. Dies führt zu einer Verteuerung, höheren Ausfallraten und eingeschränkten technischen Eigenschaften, wie z.B. langen Ansprechzeiten der Ventile. Deshalb kann auch ein solches Ventil die Forderung nach hochdynamischen Schaltzeiten nicht ausreichend erfüllen.

Die beschriebenen Zusammenhänge stellen eine Begrenzung bei den Bestrebungen nach direkt gesteuerten Sitzventilen mit möglichst großer Durchflussmenge und hoher Regeldynamik, also kurzen Ansprech- und Reaktionszeiten dar.

Es ist deshalb die Aufgabe der vorliegenden Erfindung ein möglichst kostengünstiges, direkt gesteuertes, elektromagnetisch betätigbares Sitzventil bereitzustellen, mit dem sich große Volumenströme hochdynamisch regeln lassen.

Die Aufgabe ist durch ein Sitzventil mit den Merkmalen des Anspruches 1 gelöst. Weitere vorteilhafte Ausführungen sind in den Unteransprüchen beschrieben.

Das erfindungsgemäße elektromagnetisch betätigbare Sitzventil weist ein Ventilgehäuse und eine Trennwand auf. Die Trennwand teilt das Ventilgehäuse in einen druckseitigen Zulaufraum und einen Ablaufraum und weist eine Durchtrittsöffnung auf, durch die der Zulaufraum und der Ablaufraum miteinander verbunden sind.

Die Durchtrittsöffnung in der Trennwand des Sitzventils weist zulaufseitig einen Ventilsitz auf und ist mittels eines axial verschiebbaren Ventilkolbens verschließbar. Der Ventilkolben wird durch die Druckdifferenz zwischen dem Zulaufraum und dem Ablaufraum in der geschlossenen Stellung auf dem Ventilsitz gehalten und durch Bestromen eines ihm zugeordneten Elektromagneten von dem Ventilsitz abgehoben, sodass die Durchtrittsöffnung freigegeben ist. Der bestromte Elektromagnet hält das Sitzventil in der Offenstellung, solange ein Ansteuerpuls anhält. Die Zeit, während der der Elektromagnet bestromt wird, wird auch Pulsdauer genannt.
Das der Durchtrittsöffnung entgegengesetzte Ende des Ventilkolbens ragt durch das Ventilgehäuse hindurch in die Umgebung. Die Umgebung stellt hier einen freien Raum dar, in dem vorzugsweise atmosphärischer Druck vorherrscht und in dem sich die Druckverhältnisse durch die Bewegungen des Ventilkolbens nicht merkbar verändern.

Durch eine gezielte Auswahl des Flächenverhältnisses zwischen der Fläche der Durchtrittsöffnung in der Trennwand des Sitzventils und der Querschnittsfläche des durch das Ventilgehäuse in die Umgebung hinausragenden Ventilkolbens kann nun die benötigte Kraft zum Öffnen des direkt gesteuerten Magnetventils abhängig von den erwarteten Drücken gewählt werden. Auf diese Weise wäre ein vollständiger Druckausgleich möglich, wenn die Fläche der Durchtrittsöffnung in der Trennwand genau gleich groß wäre wie die Querschnittsfläche des durch das Ventilgehäuse hindurch tretenden Ventilkolbens. Dies trifft jedoch beim erfindungsgemäßen Sitzventil nicht zu, weil hier die geschlossene Ventilstellung durch den statischen Druck gehalten wird, der sich durch die Druckdifferenz zwischen Zulaufraum und Ablaufraum ergibt. Deshalb ist die Fläche der Durchtrittsöffnung in der Trennwand vorzugsweise größer als die Querschnittsfläche des durch das Ventilgehäuse hindurch tretenden Ventilkolbens.

Da bei vielen Anwendungen die Druckverhältnisse zwischen zulaufseitigem Vorratsdruck und ablaufseitigem Druck im Voraus bekannt sind, ist es möglich, für diese Anwendungen konkret die Kräfte zu berechnen, die beim Schließen des Sitzventils auftreten und die zum Öffnen des Sitzventils durch den Elektromagneten erforderlich sind. Dementsprechend kann das Verhältnis zwischen der Querschnittsfläche des durch das Ventilgehäuse in die Umgebung hinausragenden Ventilkolbens und der Fläche der Durchtrittsöffnung festgelegt und die Bauteile optimal dimensioniert werden.
Vorteilhafterweise sind die genannten Abmessungen derart dimensioniert, dass die erwartete Druckdifferenz zwischen Vorratsdruck und ablaufseitigem Druck gerade ausreicht, um das Sitzventil sicher geschlossen zu halten, während die Kraft zum Öffnen des Sitzventils möglichst gering gehalten wird. Dadurch kann ein verhältnismäßig kleiner Elektromagnet auch ein Sitzventil mit großer Durchtrittsöffnung sehr schnell und dynamisch betätigen. Der Strombedarf zum Betrieb des Sitzventils ist geringer.

Entgegen dem Prinzip von Magnetventilen mit vollständiger Druckentlastung, bei denen der Differenzdruck zwischen Zulauf- und Ablaufseite die Verstellkraft des Ventils nicht beeinflusst, wie es beispielsweise von Schiebeventilen bekannt ist, wird hier die Druckdifferenz gezielt ausgenutzt, um das Sitzventil in der geschlossenen Stellung zu halten. Insbesondere bei Anwendungen mit einem konstanten Vorlaufdruck lässt sich so die geschlossene Ventilstellung ohne weiteren baulichen Aufwand halten.

Als weiterer Vorteil kommt hinzu, dass ein Sitzventil bauartbedingt nur einen geringen Öffnungsweg erfordert, um bereits einen großen Volumenstrom freizugeben. Dies wirkt sich im Bestreben nach einem geringen Bauraumbedarf für das ganze Ventil vorteilhaft aus. Typische Werte für den Öffnungsweg derartiger Sitzventile liegen im Bereich von 0,1 Millimeter bis zu einem Millimeter.

Eine bevorzugte Ausführung des Sitzventils sieht zumindest eine Dichtung zum Abdichten des Zulaufraumes gegenüber der Umgebung vor. Diese Dichtung kann direkt am Ventilkolben angeordnet und befestigt sein im Bereich der Öffnung des Ventilgehäuses für den Ventilkolben, um so die Durchgangsöffnung abzudichten. Ebenso ist es möglich, eine Dichtung am Ventilgehäuse im Bereich der Durchgangsöffnung des verschiebbaren Ventilkolbens zu befestigen.

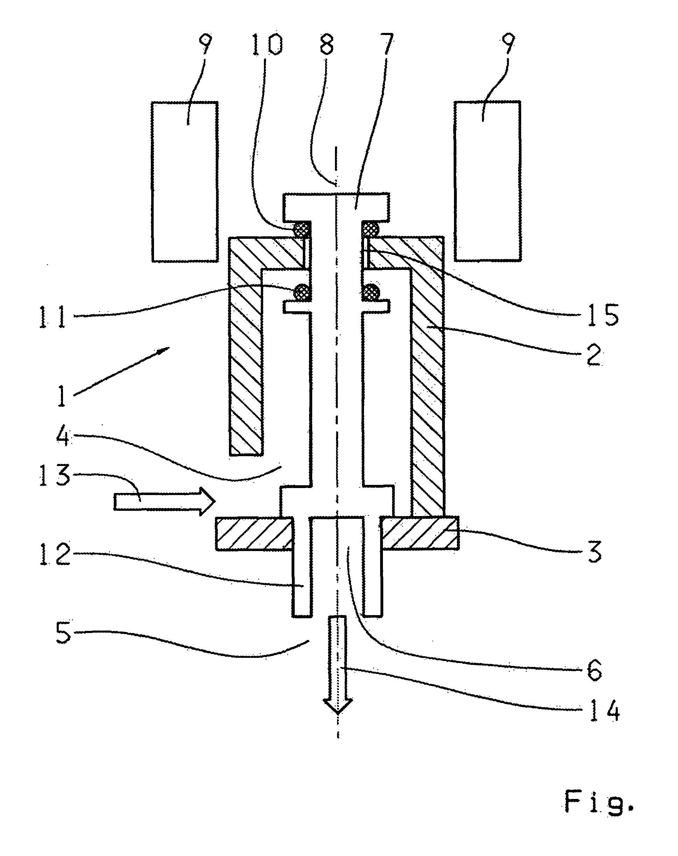

Vorzugsweise besteht die Dichtung aus einer doppelten Sitzdichtung mit zwei Dichtungsringen. Gegenüber einer Schieberingdichtung ist die Sitzdichtung weniger verschleißanfällig und dichtet zumindest in den Endlagen des Ventilkolbens zuverlässiger ab als eine Schieberingdichtung. Eine doppelte Sitzdichtung, wie sie z.B. schematisch in der Figur dieser Schrift abgebildet ist, gewährleistet eine zuverlässige Abdichtung des Zulaufraumes gegenüber der Umgebung insbesondere in den beiden Endlagen des Ventilkolbens, die der geschlossenen und der ganz geöffneten Stellung des Sitzventils entsprechen.

Die Dichtungsringe bestehen bevorzugt aus einem elastischen Material. Derartige Dichtungsringe, auch O-Ringe genannt, werden weitläufig verwendet und sind deshalb kostengünstig einsetzbar.

Schließlich ist eine weitere bevorzugte Ausführung des Sitzventils dadurch gekennzeichnet, dass die geschlossene Stellung des Ventilkolbens durch eine Schließfeder unterstützt wird, die sich einerseits am Ventilkolben und andererseits am Ventilgehäuse oder an einem gehäusefesten Teil abstützt.

Nachstehend wird anhand einer Zeichnung ein Ausführungsbeispiel der Erfindung näher erläutert.

Die Figur zeigt eine schematische Darstellung eines erfindungsgemäßen elektromagnetisch betätigbaren Sitzventils.

Das erfindungsgemäße Sitzventil 1 ist im geschlossenen Zustand dargestellt. Im Inneren des Ventilgehäuses 2 befindet sich der Zulaufraum 4, welcher durch eine Trennwand 3 vom Ablaufraum 5 getrennt ist. Die Trennwand 3 weist eine Durchtrittsöffnung 6 auf. Die Durchtrittsöffnung 6 wird durch das der Trennwand 2 zugeordnete Ende des Ventilkolbens 7 verschlossen, weil der Ventilkolben 7 in Richtung der Trennwand 3 entlang seiner Mittelachse 8 verschoben ist.

Mittels des Elektromagneten 9 kann der Ventilkolben 7 entlang seiner Mittelachse 8 weg von der Trennwand 3 verschoben werden. Dadurch wird die Durchtrittsöffnung 6 freigegeben und das Strömungsmedium gelangt vom druckseitigen Zulaufraum 4 in den Ablaufraum 5. Der Pfeil 13 veranschaulicht den Zulauf und der Pfeil 14 den Ablauf des zu regelnden Volumenstromes dar.

Im Bereich der Durchtrittsöffnung 6 weist der Ventilkolben 7 Führungselemente 12 auf, die dafür sorgen, dass der Ventilkolben 7 gleichmäßig in Richtung seiner Mittelachse 8 läuft und nicht verkantet. Bei genügender Führung des Ventilkolbens 7 an anderen Stellen kann auf Führungselemente 12 in der Durchtrittsöffnung 6 zugunsten einer möglichst ungehinderten Durchströmung des Sitzventils auch verzichtet werden.

Durch entsprechende Gestaltung der Führungselemente 12 kann der Volumenstrom abhängig vom Öffnungshub des Ventilkolbens 7 gezielt beeinflusst werden. Vorteilhaft für eine möglichst schnell reagierende Ansteuerung der nachfolgenden Vorrichtungen ist es jedoch, die Führungselemente derart auszubilden, dass sie dem durch die Durchtrittsöffnung 6 strömenden Medium möglichst geringen Strömungswiderstand entgegensetzen. D.h. bereits nach einem geringen Öffnungsweg des Ventilkolbens 7 sollte ein möglichst großer Strömungsquerschnitt im Bereich der Durchtrittsöffnung 6 freigegeben sein.

Im Bereich des der Durchtrittsöffnung 6 abgewandten Endes des Ventilkolbens 7 tritt dieser durch eine Öffnung 15 im Ventilgehäuse 2 hindurch in die Umgebung des Sitzventils 1. Zur Abdichtung der Öffnung 15 sind am Ventilkolben 7 zwei Dichtungsringe 10 und 11 angeordnet. Die beiden Dichtungsringe 10 und 11 bilden so eine doppelte Sitzdichtung, welchen den Zulaufraum 4 des Sitzventils 1 zur Umgebung hin abdichtet. Ein Dichtungsring 11 ist dazu innerhalb des Ventilgehäuses 2 am Ventilkolben 7 angeordnet, während der andere Dichtungsring 10 auf der Aussenseite des Ventilgehäuses 2 am Ventilkolben angeordnet ist. Es sind Dichtungsringe aus elastischem Material, vorzugsweise Kunststoff oder Gummi vorgesehen.

Der Ventilkolben 7 kann einstückig oder aus mehreren, starr miteinander verbundenen Teilen gefertigt sein. Dementsprechend kann der Ventilkolben an dem der Durchtrittsöffnung 6 zugewandten Ende ein Verschlussteil mit nicht dargestellten Dichtungselementen aufweisen. Es ist auch möglich, den Ventilkolben 7 derart zu gestalten, dass das Schliessen des Sitzventils durch das strömende Medium im Zulaufraum 4 unterstützt wird. Beim Ausschalten des Elektromagneten 9 kann das am Ventilkolben 7 entlang fließende Strömungsmedium diesen beschleunigt in Richtung der geschlossenen Stellung ziehen. Auf diese Weise wird auch der dynamische Druck des Strömungsmediums ausgenutzt und die Regeldynamik des Sitzventils (1) kann weiter erhöht werden.

Das der Durchtrittsöffnung 6 entgegen gesetzte Ende des Ventilkolbens 7 erfüllt die Funktion eines Ankers für die elektromagnetische Betätigung durch den Elektromagneten 9. Der Anker kann ein eigenes, am Ventilkolben 7 befestigtes Teil sein. Das Ankermaterial und die Form des Ankers werden vorteilhaft so bestimmt, dass das durch den Elektromagneten 9 erzeugte Magnetfeld optimal verstärkt und ausgenutzt wird.

Auch der Elektromagnet 9 und dessen Anordnung ist im Ausführungsbeispiel nur schematisch dargestellt und kann verschiedene Formen und Anordnungen annehmen. Es wird bei der Auslegung des Elektromagneten 9 darauf zu achten sein, dass bei Verwendung eines möglichst kleinen Elektromagneten 9 alle Anforderungen an das gewünschte Schaltverhalten, insbesondere die erforderliche Kraft zum Öffnen des Sitzventils innerhalb kurzer Zeit, erfüllt werden.

### Bezugszeichen

- 1: Sitzventil
- 2: Ventilgehäuse
- 3: Trennwand
- 4: Zulaufraum
- 5: Ablaufraum
- 6: Durchtrittsöffnung
- 7: Ventilkolben
- 8: Mittelachse
- 9: Elektromagnet
- 10: Dichtungsring
- 11: Dichtungsring
- 12: Führungselement
- 13: Pfeil
- 14: Pfeil
- 15: Öffnung

## Patentansprüche

1. Elektromagnetisch betätigbares Sitzventil (1) mit einem Ventilgehäuse (2) und mit einer Trennwand (3), die das Ventilgehäuse (2) in einen Zulaufraum (4) und einen Ablaufraum (5) teilt, wobei die Trennwand (3) eine Durchtrittsöffnung (6) aufweist, wobei die Durchtrittsöffnung (6) mittels eines axial verschiebbaren Ventilkolbens (7) verschließbar ist, und wobei der Ventilkolben (7) durch die Druckdifferenz zwischen dem Zulaufraum (4) und dem Ablaufraum (5) in einer Schließstellung gehalten wird und durch Bestromen eines ihm zugeordneten Elektromagneten (9) von der Durchtrittsöffnung (6) abgehoben und in einer Offenstellung gehalten wird, **dadurch gekennzeichnet, dass** das der Durchtrittsöffnung (6) entgegengesetzte Ende des Ventilkolbens (7) durch das Ventilgehäuse (2) hindurch in die Umgebung ragt.

2. Sitzventil nach Anspruch 1, **dadurch gekennzeichnet, dass** die Fläche der Durchtrittsöffnung (6) in der Trennwand (3) größer ist als die Querschnittsfläche des durch das Ventilgehäuse (2) hindurch tretenden Ventilkolbens (7).

3. Sitzventil nach Anspruch 1 oder 2, **dadurch gekennzeichnet**, mindestens eine Dichtung (10, 11) zum Abdichten des Zulaufraumes (4) gegenüber der Umgebung vorgesehen ist.

4. Sitzventil nach Anspruch 3, **dadurch gekennzeichnet, dass** die Dichtung (10, 11) einen ersten Dichtungsring (10) und einen zweiten Dichtungsring (11) umfasst.

5. Sitzventil nach einem der vorgenannten Ansprüche, dadurch g e - **kennzeichnet,** dass die geschlossene Stellung des Ventilkolbens (7) durch eine Schließfeder unterstützt wird, die sich einerseits am Ventilkolben (7) und andererseits am Ventilgehäuse (2) oder an einem gehäusefesten Teil abstützt.

## Claims

1. Electromagnetically actuable seat valve (1), with a valve housing (2) and with a partition (3) which divides the valve housing (2) into an inflow space (4) and an outflow space (5), the partition (3) having a passage orifice (6), the passage orifice (6) being closable by means of an axially displaceable valve piston (7), and the valve piston (7) being held in a closing position by the pressure difference between the inflow space (4) and the outflow space (5) and being lifted off from the passage orifice (6) and held in an opening position by the supply of current to an electromagnet (9) assigned to the said valve piston, **characterized in that** that end of the valve piston (7) which is opposite the passage orifice (6) projects through the valve housing (2) into the surroundings.

2. Seat valve according to Claim 1, **characterized in that** the area of the passage orifice (6) in the partition (3) is larger than the cross-sectional area of the valve piston (7) passing through the valve housing (2).

3. Seat valve according to Claim 1 or 2, **characterized in that** at least one seal (10, 11) for sealing off the inflow space (4) with respect to the surroundings is provided.

4. Seat valve according to Claim 3, **characterized in that** the seal (10, 11) comprises a first sealing ring (10) and a second sealing ring (11).

5. Seat valve according to one of the aforesaid claims, **characterized in that** the closed position of the valve piston (7) is assisted by a closing spring which is supported, on the one hand, on the valve piston (7) and, on the other hand, on the valve housing (2) or on a part fixed to the housing.

## Revendications

1. Soupape à siège à commande électromagnétique (1) comprenant un boîtier de soupape (2) et une paroi de séparation (3), qui divise le boîtier de soupape (2) en un espace d'entrée (4) et un espace de sortie (5), la paroi de séparation (3) présentant une ouverture de passage (6), l'ouverture de passage (6) pouvant être fermée au moyen d'un piston de soupape (7) déplaçable axialement, et le piston de soupape (7) étant maintenu dans une position de fermeture par la différence de pression entre l'espace d'entrée (4) et l'espace de sortie (5), et étant soulevé de l'ouverture de passage (6) et maintenu dans une position d'ouverture lors du passage d'un courant à travers un électroaimant (9) qui lui est associé, **caractérisée en ce que** l'extrémité du piston de soupape (7) opposée à l'ouverture de passage (6) pénètre à travers le boîtier de soupape (2) dans l'environnement.

2. Soupape à siège selon la revendication 1, **caractérisée en ce que** la surface de l'ouverture de passage (6) dans la paroi de séparation (3) est supérieure à la surface en section transversale du piston de soupape (7) traversant le boîtier de soupape (2).

3. Soupape à siège selon la revendication 1 ou 2, **caractérisée en ce qu'**au moins un joint d'étanchéité (10, 11) est prévu pour étancher l'espace d'entrée (4) par rapport à l'environnement.

4. Soupape à siège selon la revendication 3, **caractérisée en ce que** le joint d'étanchéité (10, 11) comprend une première bague d'étanchéité (10) et une deuxième bague d'étanchéité (11).

5. Soupape à siège selon l'une quelconque des revendications précédentes, **caractérisée en ce que** la position fermée du piston de soupape (7) est supportée par un ressort de fermeture, qui s'appuie d'une part sur le piston de soupape (7) et d'autre part sur le boîtier de soupape (2) ou sur une pièce fixée au boîtier.
